# EUROPÄISCHE PATENTSCHRIFT

(11) **EP 1 568 563 B1**
(45) Veröffentlichungstag und Bekanntmachung des Hinweises auf die Patenterteilung: **28.05.2008**
(21) Anmeldenummer: 05001876.1
(22) Anmeldetag: 29.01.2005
(51) Int. Cl.: B61D 19/00, E05F 15/14

(54) **Vorrichtung zur Verriegelung einer Schwenkschiebetür für Fahrzeuge zur Personenbeförderung, insbesondere Fahrzeuge des öffentlichen Personennahverkehrs**
Device for locking a pivotable sliding door for vehicles for passenger transport, especially vehicles for urban passenger transport
Dispositif de verrouillage d'une porte coulissante et pivotante pour véhicules pour le transport de personnes, notamment véhicules de transport urbain de personnes

(30) Priorität: 25.02.2004 DE 202004002908 U
(43) Veröffentlichungstag der Anmeldung: 31.08.2005
(73) Patentinhaber: Gebr. Bode GmbH & Co. KG, 34123 Kassel (DE)
(72) Erfinder: Arend, Ulrich, 34576 Homberg-Dickershausen (DE)
(74) Vertreter: Bauer Vorberg Kayser Patentanwälte

(56) Entgegenhaltungen:
- EP-A- 0 400 188
- EP-A- 0 837 209
- EP-A- 0 936 119

## Beschreibung

Die Erfindung betrifft eine Vorrichtung zur Verriegelung einer Schwenkschiebetür für Fahrzeuge zur Personenbeförderung, insbesondere Fahrzeuge des öffentlichen Personennahverkehrs, mit den Merkmalen aus dem Oberbegriff des Patentanspruchs 1.

Schwenkschiebetüren dieser Bauart sind bekannt und beispielsweise in EP 0 536 528 B1 beschrieben.

Ein bei derartigen Schwenkschiebetüren auftretendes Problem besteht darin, die Türblätter im geschlossenen Zustand der Schwenkschiebetür derart zu verriegeln, dass sie bei einer Wechselbelastung aufgrund des beispielsweise bei Begegnungen oder Tunneldurchfahrten zwischen Druck und Sog wechselnden Druckunterschiedes zwischen Außen- und Innenraum sicher und ohne Klappergeräusche in ihrer Position festgehalten sind. Weiterhin sollte die Verriegelung so ausgestattet sein, dass im geschlossenen Zustand der Tür ein Aufdrücken oder Aufschieben der Türblätter nicht möglich ist.

Der Erfindung liegt die Aufgabe zugrunde, eine Vorrichtung zur Verriegelung einer Schwenkschiebetür mit den im Oberbegriff des Patentanspruchs 1 angegebenen Merkmalen zu schaffen, welche die o.g. Bedingungen erfüllt.

Die Lösung dieser Aufgabe erfolgt erfindungsgemäß mit den Merkmalen aus dem kennzeichnenden Teil des Schutzanspruchs 1. Vorteilhafte Weiterbildungen der Erfindung sind in den abhängigen Ansprüchen beschrieben.

Der Grundgedanke der Erfindung besteht darin, das Türblatt bzw. bei zweiflügeligen Türen die Türblätter im oberen und unteren Bereich im geschlossenen Zustand der Tür über Rollenführungen derart festzuhalten, dass sie sowohl nach innen als auch nach außen abgestützt sind und somit keine Bewegungen in ihrer Querrichtung ausführen können. Dabei wird die Verriegelung der Rollenführungen im geschlossenen Zustand der Tür in an sich bekannter Weise dadurch erreicht, dass die Koppelstange und das ihr zugeordnete Übertragungselement für eine Drehbewegung sich in oder kurz hinter einer Totpunktlage befinden, wodurch erreicht wird, dass die die Rollenhebel tragende Drehsäule insgesamt gegen Drehbewegung blockiert ist und somit sowohl der obere als auch der untere Rollenhebel verriegelt sind.

Es hat sich gezeigt, dass mit der erfindungsgemäßen Verriegelungsvorrichtung eine Verriegelung erreicht wird, die auch bei einer hohen Wechselbelastung durch Druck und Sog sicher ist.

Im folgenden wird anhand der beigefügten Zeichnungen ein Ausführungsbeispiel für eine Schwenkschiebetür mit einer Vorrichtung zur Verriegelung nach der Erfindung näher erläutert.

### In den Zeichnungen zeigen:

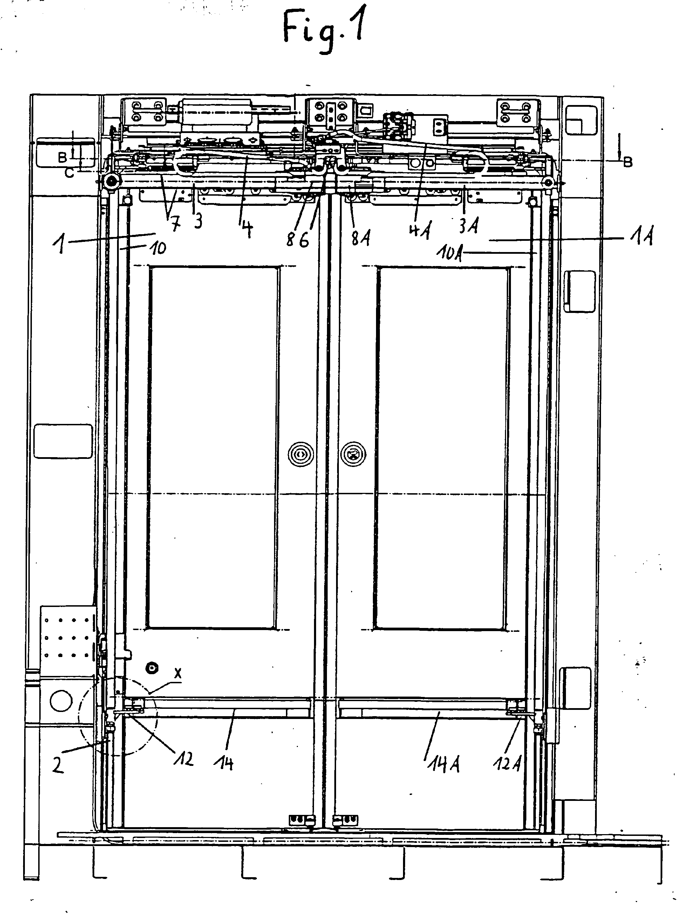

- Fig. 1: in einer aus dem Fahrzeuginneren gesehenen Gesamtansicht eine zweiflügelige Schwenkschiebetür in einer in der Höhe verkürzten Darstellung;

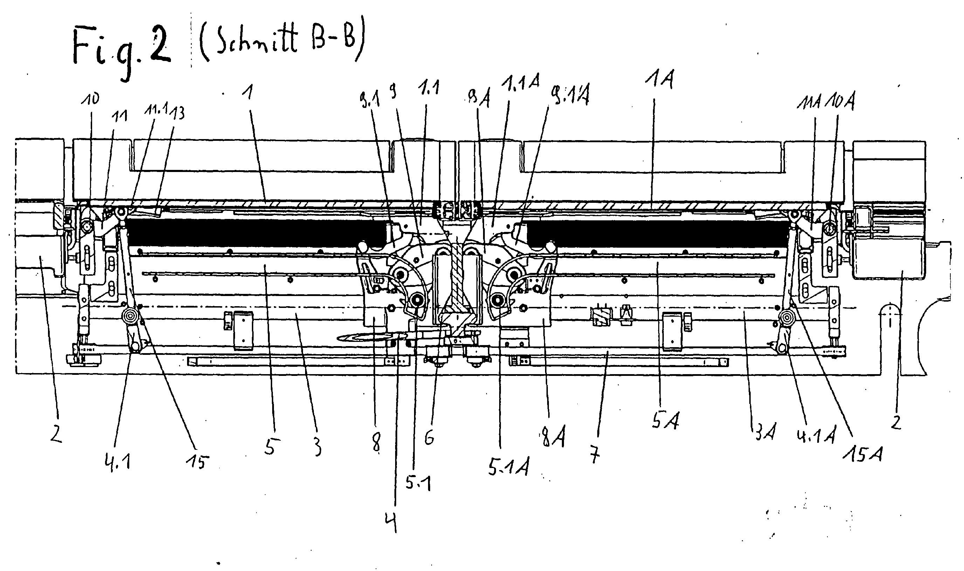

- Fig. 2: einen Schnitt nach der Linie B-B in Fig. 1 in vergrößerter Darstellung;

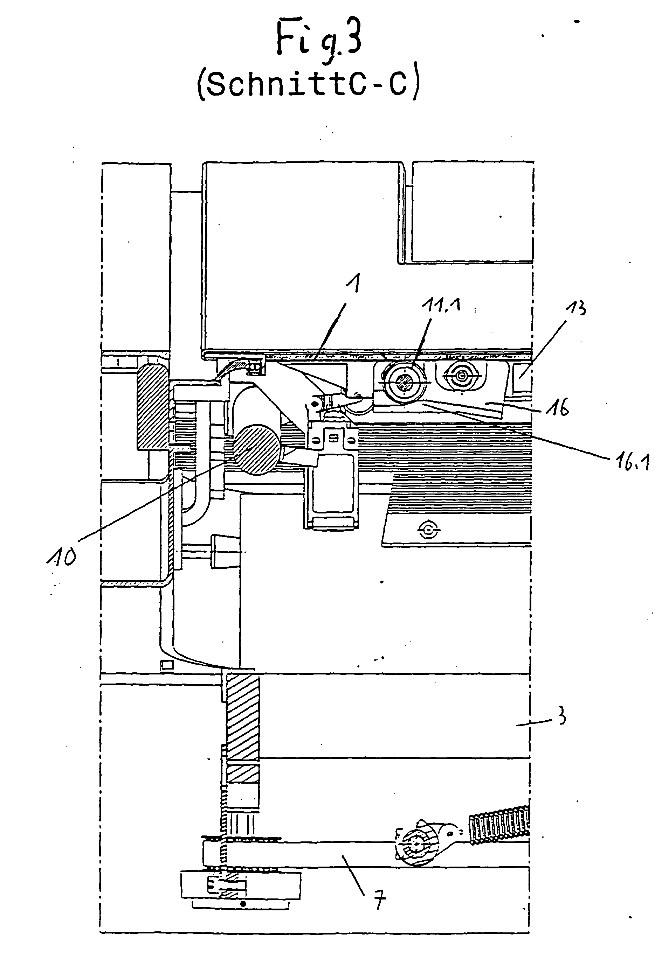

- Fig. 3: einen Schnitt nach der Linie C-C in Fig. 1 in vergrößerter Darstellung;
- Fig. 4: den Bereich X in Fig. 1 in vergrößerter Darstellung;
- Fig. 5: einen Schnitt nach der Linie A-A in Fig. 4;
- Fig. 6: einen Schnitt nach der Linie B-B' in gegenüber Fig. 2 stärker vergrößerter Darstellung.

Die in den Zeichnungen dargestellte Schwenkschiebetür ist als zweiflügelige Tür ausgebildet und besitzt ein erstes Türblatt 1 und ein zweites Türblatt 1A. Im folgenden werden die der ersten und zweiten Türhälfte entsprechenden Bauteile mit den gleichen Bezugsziffern bezeichnet, wobei die dem zweiten Türblatt zugeordneten Bauteile jeweils durch A gekennzeichnet sind.

Das Türblatt 1 ist mittels eines drehsteifen Tragarms 1.1 über ein Parallelogrammgestänge, das aus einem Schwenkarm 9 und einem Stützarm 9.1 besteht, gelenkig mit einem Tragglied 8 verbunden, das als Rollenschlitten oder auch als Kugelhülse ausgebildet sein kann. Das Tragglied 8 ist auf einem Führungselement 3 geführt, das als Rundstange oder Führungsschiene ausgebildet sein kann. Das Führungselement 3 ist fest mit dem Türportal 2 verbunden. Das Tragglied 8 ist von einer beispielsweise als Elektromotor ausgebildeten Antriebsvorrichtung 6 aus über einen Nockenriementrieb 7 in seiner Längsrichtung auf dem Führungselement 3 verschiebbar.

Die Querbewegung des Türblatts 1 wird mit der Längsbewegung durch eine mit dem Türportal 2 fest verbundene Führungsschiene 5 koordiniert, in welche eine am Schwenkarm 9 angeordnete Führungsrolle 5.1 eingreift. Aufgrund der Ausbildung der Führungsschiene 5 wird über den Schwenkarm 9 der Tragarm 1.1 und mit ihm das Türblatt 1 bei der Längsbewegung nach außen geführt. Die Querbewegung des Türblatts 1 wird unterstützt, indem die Reaktionskraft der Antriebsvorrichtung 6 über ein als Stange ausgebildetes Koppelelement 4 auf ein Übertragungselement 4.1 für eine Drehbewegung übertragen wird, das als Schwenkhebel ausgebildet ist und über eine Koppelstange 15 mit einem oberen Rollenhebel 11 verbunden ist, der von einer vertikal verlaufenden und drehbar am Türportal 2 gelagerten Drehsäule 10 getragen wird. Wie den Zeichnungen zu entnehmen, wird durch diese Vorrichtung die Reaktionskraft der Antriebsvorrichtung 6 in ein Drehmoment umgewandelt, das eine Drehbewegung der Drehsäule 10 erzeugt, wodurch, wie weiter unten noch erläutert, eine Querkraft auf das Türblatt 1 im Bereich der Nebenschließkante des Türblatts 1 ausgeübt wird, die das Türblatt an dieser Stelle nach außen führt. Gleichzeitig wird an dieser Stelle eine Abstützung und Verriegelungsmöglichkeit geschaffen, mittels der erreicht wird, dass im geschlossenen Zustand der Tür das Türblatt 1 sowohl nach innen als auch nach außen abgestützt ist und keine Bewegungen in der Querrichtung ausführen kann.

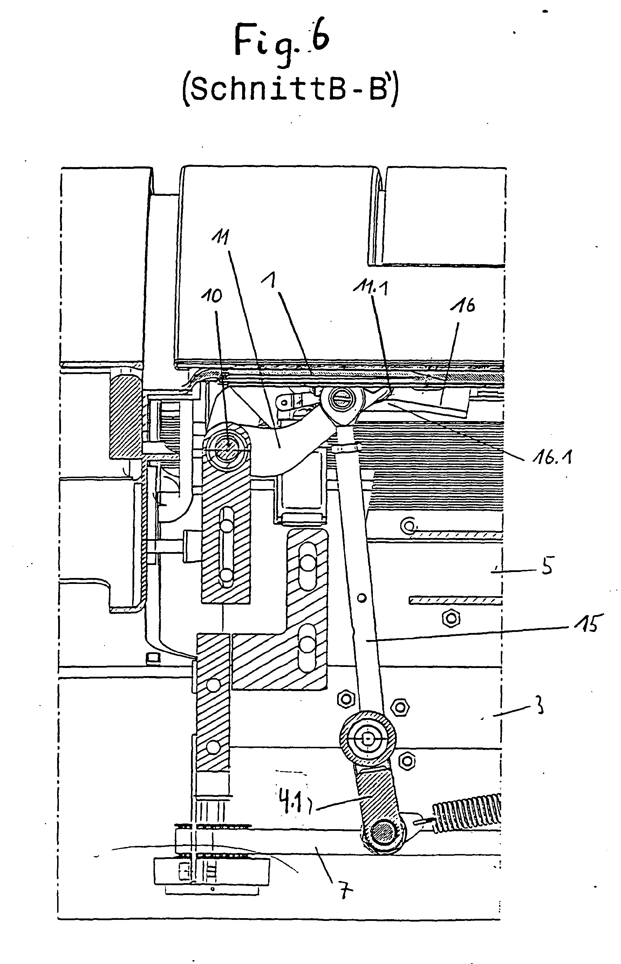

Um diese zu erreichen, wird in erster Linie dafür gesorgt, dass in an sich bekannter Weise im geschlossenen Zustand die Koppelstange 15 und der Schwenkhebel 4.1 in oder kurz hinter einer Totpunktlage liegen, wie beispielsweise in Fig. 6 zu erkennen, derart, dass somit die Drehbewegung der Drehsäule 10 blockiert ist.

Weiterhin trägt der mit der Drehsäule 10 verbundene obere Rollenhebel 11 eine Rolle 11.1, welche im letzten Abschnitt der Schließbewegung des Türblatts 1 in ein Formeinlaufstück 16 gelangt, in dem sie in der Geschlossenstellung des Türblatts 1 hinter einem Kurvenstück 16.1 festgehalten ist. Auf diese Weise ist der obere Teil des Türblatts 1 in der Geschlossenstellung verriegelt. Bei der Öffnungsbewegung des Türblatts 1 läuft die Rolle 11.1 in eine am Türblatt 1 angeordnete Führungsschiene 13 ein.

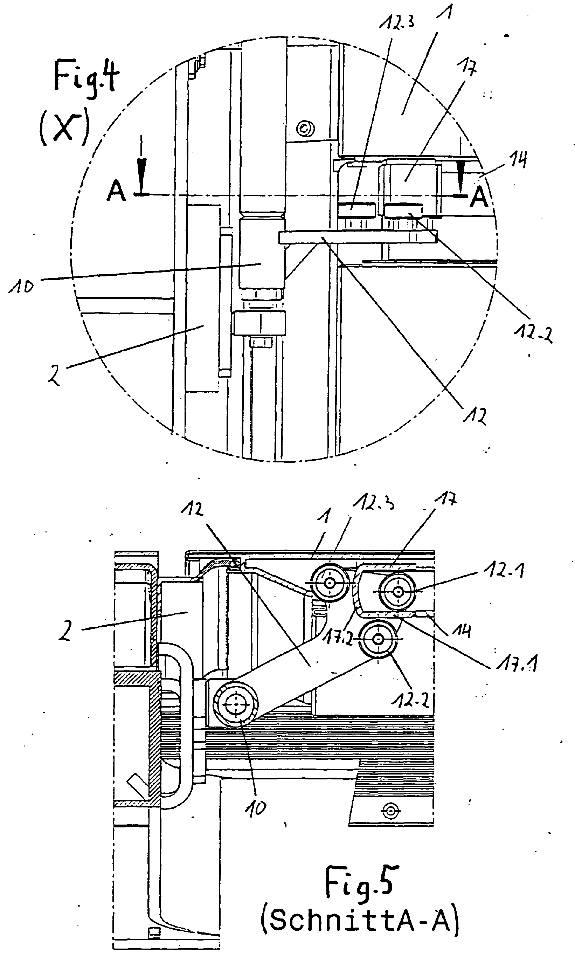

Im unteren Bereich des Türblatts 1 ist an der Drehsäule 10 ein unterer Rollenhebel 12 angeordnet. Diese Anordnung ist insbesondere den Fig. 4 und 5 zu entnehmen. Der untere Rollenhebel 12 trägt drei Rollen 12.1, 12.2 und 12.3, von denen zwei Rollen 12.1 und 12.2 einander gegenüberliegen, wobei eine erste, dem Türblatt 1 zugewandte Rolle 12.1 in einer am unteren Teil des Türblatts 1 angeordneten Führungsschiene 14 läuft und im letzten Abschnitt der Schließbewegung in ein am Ende der unteren Führungsschiene 14 angeordnetes Aufnahmestück 17 einläuft, das eine äußere Seitenwand 17.1 besitzt, an der sich die zweite, außerhalb des Aufnahmestücks 17 liegende Rolle 12.2 von außen her abstützt. Die dritte am Rollenhebel 12 angeordnete Rolle 12.3 liegt im geschlossenen Zustand des Türblatts 1 einer Stirnwand 17.2 des Aufnahmestücks 17 außen gegenüber.
In Fig. 5 ist der Rollenhebel 12 mit den Rollen 12.1 bis 12.3 im geschlossenen Zustand der Tür dargestellt. Man erkennt, dass in dieser Stellung das Türblatt 1 gegen Querbewegungen nach außen und nach innen verriegelt ist. Bei der Öffnungsbewegung schwenkt der Rollenhebel 12 aufgrund der Drehbewegung der Drehsäule 10 nach außen, und die Rollen 12.2 und 12.3 geraten somit in eine Lage parallel zur Führunsschiene 14, an der sie im weiteren Verlauf der Öffnungsbewegung des Türblatts 1 geführt entlanglaufen.

## Patentansprüche

1. Vorrichtung zur Verriegelung einer Schwenkschiebetür für Fahrzeuge zur Personenbeförderung, insbesondere Fahrzeuge des öffentlichen Personennahverkehrs, bei welcher mindestens ein Türblatt (1, 1A) in seiner Längsrichtung auf einem Führungselement (3) verschiebbar und quer zur Ebene des Türblatts (1,1A) bewegbar ist, wobei die Längsbewegung des Türblatts (1,1A) mit der Querbewegung durch eine mit dem Türportal (2) fest verbundene Führungsschiene (5) koordiniert ist, in welche ein mit dem Türblatt (1,1A) verbundenes Führungsmittel (5.1) eingreift und bei der die Abtriebskraft einer Antriebsvorrichtung (6) am Türblatt (1,1A) in Richtung des Führungselements (3) angreift und Mittel zur Erzeugung oder Unterstützung der Querbewegung vorgesehen sind und bei welcher am Türportal (2) eine vertikal verlaufende Drehsäule (10) drehbar gelagert ist, an der ein oberer und ein unterer Rollenhebel (11, 12) angeordnet sind, die jeweils in am Türblatt (1, 1A) im oberen bzw. unteren Bereich angeordnete Führungen (13, 14) eingreifen, und die Drehsäule (10) mit den Mitteln zur Erzeugung oder Unterstützung der Querbewegung über eine Koppelstange (15) und ein Übertragungselement (4.1) für eine Drehbewegung gekoppelt ist, **gekennzeichnet durch** folgende Merkmale:
a) In der Geschlossenstellung des Türblatts (1,1A) befinden sich Koppelstange (15) und das Übertragungselement (4.1) für eine Drehbewegung in oder kurz hinter einer Totpunktlage, derart, dass die Drehbewegung der Drehsäule (10) blockiert ist;
b) Der obere Rollenhebel (11) trägt eine Rolle (11.1), welche im letzten Abschnitt der Schließbewegung des Türblatts (1,1A) in ein Formeinlaufstück (16) gelangt, in dem sie in der Geschlossenstellung des Türblatts (1,1A) hinter einem Kurvenstück (16.1) festgehalten ist;
c) Der untere Rollenhebel (12) trägt mindestens zwei in Querrichtung zum Türblatt (1, 1A) einander gegenüberliegende Rollen (12.1, 12.2), von denen eine erste, dem Türblatt (1, 1 A) zugewandte Rolle (12.1) in der unteren Führungsschiene (14) läuft und im letzten Abschnitt der Schließbewegung in ein am Ende der unteren Führungsschiene (14) angeordnetes Aufnahmestück (17) einläuft, mit einer äußeren Seitenwand (17.1), an der sich die zweite, außerhalb des Aufnahmestücks (17) liegende Rolle (12.2) von außen her abstützt.

2. Vorrichtung nach Anspruch 1, **dadurch gekennzeichnet, dass** der untere Rollenhebel (12) eine dritte Rolle (12.3) trägt, die im geschlossenen Zustand des Türblatts (1,1A) einer Stirnwand (17.2) des Aufnahmestücks (17) außen gegenüberliegt.

3. Vorrichtung nach Anspruch 1 oder 2, **dadurch gekennzeichnet, dass** Mittel zur Unterstützung der Querbewegung des Türblatts (1, 1A) vorgesehen sind, die ein Koppelelement (4, 4A) aufweisen, durch welches die Reaktionskraft der Antriebsvorrichtung (6) auf das als Schwenkhebel (4.1, 4.1 A) ausgebildete Übertragungselement (4.1) für eine Drehbewegung übertragen wird.

## Claims

1. A device for locking a sliding plug door for passenger-conveying vehicles, in particular for public service vehicles in which at least one door leaf (1, 1A) can be displaced in its longitudinal direction on a guide element (3) and can be moved transversely to the plane of the door leaf (1, la), wherein the longitudinal movement of the door leaf (1, 1A) is coordinated with the transverse movement by a guide rail (5) fixedly connected to the door portal (2), in which a guide means (5.1) connected to the door leaf (1, 1A) engages and in which the output force of a drive device (6) acts on the door leaf (1, 1a) in the direction of the guide element (3) and means for generating or supporting the transverse movement are provided and in which a vertically running rotary pillar (10) is rotatably mounted on the door portal (2), on which an upper and a lower roller lever (11, 12) are disposed, which levers each engage in guides (13, 14) disposed on the door leaf (1,1A) in the upper or lower region and the rotary pillar (10) is coupled to the means for generating or supporting the transverse movement via a coupling rod (15) and a transmission element (4.1) for a rotary movement, **characterised by** the following features:
a. in the closed position of the door leaf (1, 1A), the coupling rod (15) and the transmission element (4.1) for a rotary movement are located in or shortly beyond a dead point position in such a manner that the rotary movement of the rotary pillar (10) is blocked;
b. the upper roller lever (11) carries a roller (11.1) which, in the last section of the closing movement of the door leaf (1, 1A), enters into a shaped lead-in piece (16) in which it is held firmly in the closed position of the door leaf (1, 1A) behind a curved piece (16.1)
c. the lower roller lever (12) carries at least two rollers (12.1, 12.2) located opposite to one another in the transverse direction to the door leaf (1, 1A), of which the first roller (12.1) facing the door leaf (1, 1A) runs in the lower guide rail (14) and in the last section of the closing movement, runs into a receiving piece (17) located at the end of the lower guide rail (14), with an outer side wall (17.1) on which the second roller (12.2) located outside the receiving piece (17) is supported from outside.

2. The device according to claim 1, **characterised in that** the lower roller lever (12) carries a third roller (12.3) which is located opposite a front wall (17.2) of the receiving piece (17) in the closed state of the door leaf (1, 1A).

3. The device according to claim 1 or 2, **characterised in that** means for supporting the transverse movement of the door leaf (1, 1A) are provided, said means comprising a coupling element (4, 4A) by which means the reaction force of the drive device (6) is transmitted onto the transmission element (4.1) configured as a pivoting lever (4.1, 4.1A) by means of a rotary movement.

## Revendications

1. Dispositif de verrouillage d'une portière coulissante pivotante pour des véhicules destinés au transport de personnes, notamment pour des véhicules de transport en commun, sur lequel au moins un vantail de portière (1, 1A) est déplaçable en translation sur sa direction longitudinale sur un élément de guidage (3) et déplaçable à la transversale du plan du vantail de portière (1, 1A), le déplacement longitudinal du vantail de portière (1, 1A) étant coordonné avec le déplacement à la transversale par un rail de guidage (5) fixement relié avec le portique de la portière (2), dans lequel s'engage un moyen de guidage (5.1) relié avec le vantail de portière (1, 1A) et sur laquelle la force de réduction d'un dispositif d'entraînement (6) est appliquée sur le vantail de portière (1, 1A) en direction de l'élément de guidage (3) et il est prévu des moyens pour initier ou pour assister le déplacement transversal et sur laquelle, une colonne rotative (10) s'étendant à la verticale, sur laquelle sont disposés un levier à galet supérieur et un levier à galet inférieur (11, 12) s'engageant chacun dans des guidages (13, 14), disposés chacun dans la zone supérieure ou inférieure du vantail de portière (1, 1A) est logée en rotation sur le portique de portière (2) et la colonne rotative (10) est accouplée avec les moyens pour initier et pour assister le déplacement transversal par l'intermédiaire d'une barre d'accouplement (15) et un élément de transmission (4.1) est accouplé pour un mouvement de rotation, **caractérisé par** les attributs suivants :
a. dans la position de fermeture du vantail de porte (1, 1A) se trouvent des barres d'accouplement (15) et en ce que pour un mouvement de rotation, l'élément de transmission (4.1) est bloqué dans une position de point mort ou peu après cette dernière, de sorte à bloquer le mouvement de rotation de la colonne rotative (10) ;
b. le levier à galet supérieur (11) porte un galet (11.1), qui dans la dernière partie du mouvement de fermeture du vantail de porte (1,1A) pénètre dans une pièce d'entrée moulée (16) dans laquelle il est maintenu derrière une pièce à came (16.1), en position de fermeture du vantail de portière (1, 1A)
c. le levier à galet inférieur (12) porte au moins deux galets (12.1, 12.2) opposés en direction longitudinale par rapport au vantail de portière (1, 1A), dont un galet (12.1) faisant face au vantail de portière (1, 1A) roule dans le rail de guidage inférieur (14) et dans la dernière partie du mouvement de fermeture, pénètre dans une pièce de logement (17) disposée sur l'extrémité du rail de guidage inférieur (14), avec une paroi latérale extérieure (17.1), sur laquelle le deuxième galet (12.2) se situant à l'extérieur de la pièce de logement (17) s'appuie par l'extérieur.

2. Dispositif selon la revendication 1, **caractérisé en ce que** le levier à galet inférieur (12) porte un troisième galet (12.3), qui en position fermée du vantail de porte (1, 1A) est opposé à l'extérieur à une paroi frontale (17.2) de la pièce de logement (17).

3. Dispositif selon la revendication 1 ou 2, **caractérisé en ce qu'**il est prévu des moyens pour assister le déplacement transversal du vantail de porte (1, 1A), qui comportent un élément d'accouplement (4, 4A), par l'intermédiaire duquel la force de réaction du dispositif d'entraînement (6) est transmise par un mouvement de rotation sur l'élément de transmission (4.1) réalisé sous la forme d'un levier pivotant (4.1, 4.1A).
